(19) Europäisches Patentamt / European Patent Office / Office européen des brevets

(11) **EP 1 851 582 B1**

(12) **FASCICULE DE BREVET EUROPEEN**

(45) Date de publication et mention de la délivrance du brevet:
**16.10.2019 Bulletin 2019/42**

(21) Numéro de dépôt: **06709264.3**

(22) Date de dépôt: **07.02.2006**

(51) Int Cl.:
**G02C 7/02** *(2006.01)*      **G02C 7/06** *(2006.01)*
**G02C 7/08** *(2006.01)*

(86) Numéro de dépôt international:
**PCT/FR2006/000276**

(87) Numéro de publication internationale:
**WO 2006/084986 (17.08.2006 Gazette 2006/33)**

(54) **PROCEDE DE DEFINITION D'UNE FACE SUPPLEMENTAIRE POUR LUNETTES**

VERFAHREN ZUM DEFINIEREN EINER ERGÄNZUNGSVORDERSEITE FÜR BRILLEN

METHOD OF DEFINING A SUPPLEMENTARY FACE FOR SPECTACLES

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **08.02.2005  FR 0501245**

(43) Date de publication de la demande:
**07.11.2007  Bulletin 2007/45**

(73) Titulaire: **Essilor International**
**94220 Charenton-le-Pont (FR)**

(72) Inventeur: **GUILLOUX, Cyril**
**F-94220 Charenton-Le-Pont (FR)**

(74) Mandataire: **Cabinet Plasseraud**
**66, rue de la Chaussée d'Antin**
**75440 Paris Cedex 09 (FR)**

(56) Documents cités:
**EP-A- 0 578 833        WO-A-01/81987**
**GB-A- 2 038 020        US-A- 3 305 294**
**US-A- 5 499 063        US-A- 5 644 374**

- **PATENT ABSTRACTS OF JAPAN vol. 013, no. 066 (P-828), 15 février 1989 (1989-02-15) & JP 63 254415 A (SEIKO EPSON CORP), 21 octobre 1988 (1988-10-21)**

## Description

La présente invention concerne les faces supplémentaires pour lunettes, ou "clip-on". Dans la suite de la description, on désigne par le terme anglais "clip-on" une face supplémentaire pour lunettes, c'est-à-dire un ensemble détachable formé d'un support et de verres, destiné à s'accrocher sur une monture de lunettes. Lorsqu'un tel clip-on est monté sur une monture, les verres du clip-on sont disposés devant les verres montés dans la monture de lunettes. De tels clip-on sont notamment proposés pour fournir une protection solaire à des porteurs de lunettes non teintées.

Diverses solutions existent pour assurer le montage détachable des clip-on sur les montures de lunettes. Ainsi, des solutions de type magnétique sont décrites dans US-A-5 737 054, US-A-6 547 703 et US-A-6 412 942. Des solutions de type mécanique sont décrites dans US-A-6 474 810, US-A-5 774 200, US-A-5 724 118, US-A-5 694 192, US-A-5 493 348 et US-A-5 790 230.

Des clip-on ont été proposés pour satisfaire les besoins de porteurs presbytes particuliers, comme les radiologues, pilotes d'avions ou autres. Ces porteurs ont besoin de zones de vision différentes des zones classiques utilisées pour les verres progressifs - vision de près dans le bas du verre, vision de loin dans le haut du verre. Par exemple, les pilotes d'avions ont besoin d'une zone de vision de près dans le haut du verre, pour pouvoir regarder des cadrans situés en haut de la cabine.

WO-A-01 81987 propose un équipement destiné à des porteurs presbytes, ayant besoin de regarder dans l'espace objet proche ou intermédiaire à travers la partie de verres progressifs ou multifocaux qui correspond à la vision intermédiaire ou à la vision de loin. Ce document propose d'ajouter sur une monture de lunettes un support avec des verres additionnels de puissance positive, s'étendant sur la partie supérieure des verres de lunettes. Les verres additionnels sont bifocaux ou présentent une variation de puissance. Les verres additionnels donnés à titre d'exemple sont uniquement définis par leur puissance en partie basse et en partie haute. Un premier exemple concerne un verre additionnel présentant une puissance additionnelle d'une dioptrie dans la partie inférieure et une puissance additionnelle de 0,25 dioptrie dans la partie supérieure. Un deuxième exemple concerne un verre additionnel présentant une puissance additionnelle de 0,25 dioptrie dans la partie inférieure et une puissance additionnelle d'une dioptrie dans la partie supérieure. Les verres additionnels et leur forme ont pour effet de générer une discontinuité importante dans la fonction optique du porteur, au niveau de la partie inférieure du verre. Une simulation conduite avec un verre progressif type Varilux Panamic de base nulle et d'addition 2 dioptries donne les résultats suivants. Pour un verre additionnel monofocal d'une puissance d'une dioptrie, la fonction optique de l'ensemble Varilux Panamic et verre additionnel présente, le long de la méridienne, une discontinuité brutale de plus d'une dioptrie, lorsque le regard passe au niveau du bord inférieur du verre additionnel. Pour un verre additionnel d'une puissance variant d'une dioptrie dans la partie supérieure à 0,25 dioptrie dans la partie inférieure, la fonction optique de l'ensemble Varilux Panamic et verre additionnel présente, le long de la méridienne, une discontinuité brutale de l'ordre de 0,75 dioptrie, lorsque le regard passe au niveau du bord inférieur du verre additionnel. La simulation montre en outre que les aberrations périphériques du clip-on et du verre se combinent de façon malheureuse, dans la zone optique modifiée par le clip-on. Les aberrations périphériques de l'ensemble sont donc plus marquées que les aberrations périphériques du verre de base.

US-A-6 027 214 propose des clip-on avec des zones de corrections locales, dédiés à des applications particulières. Ce document ne donne pas de précision sur la nature des zones de correction. US-A-5 880 805 propose un clip-on dont les deux tiers supérieurs sont blancs (puissance nulle) et dont le tiers inférieur présente une puissance de une dioptrie ou plus. US-A-6 244 705 propose un clip-on s'étendant sur la partie supérieure du verre de la monture, avec une valeur de puissance constante. US-A-5 598 232 propose un dispositif permettant de superposer à la zone de vision de près d'un verre bifocal une lentille conformée comme cette zone de vision de près, de puissance négative ; on peut ainsi passer d'un verre bifocal à un verre présentant une puissance uniforme adapté à la vision de loin.

Ces différents documents identifient les problèmes particuliers de certains porteurs presbytes. Toutefois, ils ne proposent que des solutions fondées sur des approximations peu satisfaisantes. En effet, dans la superposition du clip-on et du verre, le clip-on comme le verre sont considérés comme des lentilles minces. En outre, pour le calcul, ces clip-on ne tiennent pas compte des caractéristiques optiques formées par le "verre de base", comme par exemple la répartition de la puissance et des aberrations qui constituent le design optique. Ces clip-on sont donc approximatifs sur la résultante optique de l'ensemble du verre et du clip-on. En termes de confort pour le porteur, ces solutions ne donnent pas satisfaction.

Par ailleurs, pour établir une prescription optique, les ophtalmologistes utilisent généralement des combinaisons de lentilles, qui sont superposées devant le porteur.

L'invention propose donc, dans un mode de réalisation un procédé de définition d'une face supplémentaire pour lunettes (ou clip-on), selon la revendication 1.

Le procédé comprend
les étapes de :

- choix d'un verre adapté à la prescription d'un porteur ;
- modélisation de la position du verre choisi et de la position d'une face supplémentaire devant le verre choisi ;

- choix d'une fonction optique pour l'ensemble du verre choisi et de la face supplémentaire ;
- calcul des caractéristiques de la face supplémentaire par optimisation optique pour un porteur standard, en utilisant comme cible d'optimisation la fonction optique choisie.

Dans un mode de mise en oeuvre, l'étape de calcul s'effectue par optimisation d'une surface de la face supplémentaire. On peut dans ce cas prévoir que la surface optimisée est la surface de la face supplémentaire voisine du verre. Il est encore possible que la surface de la face supplémentaire autre que la surface optimisée soit sphérique.

L'invention propose encore un ensemble d'une face supplémentaire pour lunettes et d'un verre selon la revendication 9. L'ensemble présente :

- un dispositif de montage détachable, adapté au montage détachable de la face supplémentaire devant un verre monté dans les lunettes ;
- une surface au moins égale à la surface du verre et
- une variation de puissance optique continue sur cette surface.

La face supplémentaire peut présenter une épaisseur au centre inférieure ou égale à 2.5 mm et / ou un traitement de surface sur au moins une de ses surfaces.

Enfin, l'invention propose une combinaison d'une telle face supplémentaire et d'un verre adapté à être monté dans des montures de lunettes.

Dans une telle combinaison, on peut prévoir que :

- le verre présente un centre optique ou géométrique ;
- la face supplémentaire présente une surface arrière sphérique présente une sphère égale à la sphère de la face avant du verre au dit centre.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, une représentation schématique d'un système verre-oeil ;
- figure 2, un profil optique schématique en puissance moyenne d'un verre progressif dans les conditions au porté ;
- figure 3, des profils optiques schématiques en puissance moyenne de verres spécialisés ;
- figure 4, un graphe de puissance porteur suivant la méridienne, pour un verre progressif de l'état de la technique ;
- figure 5, une carte de la puissance porteur moyenne, pour le verre progressif de la figure 4 ;

- figure 6, une carte de l'astigmatisme résultant, pour le verre progressif de la figure 4 ;
- figures 7 à 9, un graphe et des cartes similaires à celles des figures 4 à 6, pour un premier verre spécialisé de l'état de la technique ;
- figure 10, un graphe de la sphère moyenne suivant la méridienne pour la surface arrière d'un premier clip-on selon l'invention, permettant de transformer la fonction optique du verre progressif des figures 4 à 6 en celle du premier verre spécialisé des figures 7 à 9 ;
- figures 11 et 12, des cartes de sphère moyenne et de cylindre de la surface arrière du clip-on de la figure 10 ;
- figures 13 à 15, un graphe et des cartes similaires à celles des figures 4 à 6, pour un deuxième verre spécialisé de l'état de la technique ;
- figure 16, un graphe de la sphère moyenne suivant la méridienne pour la surface arrière d'un deuxième clip-on selon l'invention, permettant de transformer la fonction optique du verre progressif des figures 4 à 6 en celle du verre spécialisé des figures 13 à 15 ;
- figures 17 et 18, des cartes de sphère et de cylindre de la surface arrière du clip-on de la figure 16 ;
- figure 19, un ordinogramme du procédé de l'invention.

L'invention propose un clip-on, qui est destiné à être monté sur un verre progressif. Le clip-on recouvre l'ensemble de la surface du verre progressif sur lequel il est monté et ne présente pas de discontinuité sur cette surface.

On appelle verre progressif, de façon connue en soi, les verres destinés aux porteurs presbytes, qui présentent une zone de vision de loin dans la partie supérieure du verre, une zone de vision de près dans la partie inférieure du verre et une addition de puissance de la partie supérieure à la partie inférieure du verre. De tels verres sont par exemples décrits dans FR-A-2 699 294, US-A-5 270 745 ou US-A-5 272 495, FR-A-2 683 642, FR-A-2 699 294 ou encore FR-A-2 704 327. Ils sont généralement déterminés par optimisation, à partir d'un certain nombre de contraintes imposées aux différentes caractéristiques de la lentille. Ces verres sont généralistes, en ce qu'ils sont adaptés aux différents besoins courants du porteur.

On appelle verre spécialisé un verre présentant une progression de puissance, qui est dédié à une activité particulière ou à une prescription particulière. De tels verres sont par exemple décrits dans FR-A-2 588 973, qui propose des verres destinés aux jeunes presbytes ; ces verres sont prescrits uniquement en fonction de la puissance nécessaire au porteur en vision de près, indépendamment de la puissance nécessaire au porteur en vision de loin. FR-A-2 769 997 propose des verres spécialisés, assurant au porteur les avantages d'un verre unifocal en vision de près, avec en outre une vision intermédiaire. La demande de brevet français déposée le 3 juin 2004 sous le numéro 04 06002 et intitulée *Lentille ophtalmique* décrit un verre assurant au porteur les avantages d'un verre unifocal en vision de loin, avec en outre une vision intermédiaire ; un tel verre est notamment adapté à la conduite automobile.

Le clip-on de l'invention assure une transformation de la fonction optique du verre progressif sur lequel il est monté. Puisque le clip-on recouvre l'ensemble de la surface du verre progressif, il assure que le porteur de l'ensemble présente une fonction optique modifiée sur l'ensemble du champ de vision du verre progressif. En outre, puisque le clip-on ne présente pas de discontinuité, il ne génère pas de discontinuité dans la fonction optique fournie au porteur de l'ensemble du verre progressif et du clip-on. Le porteur dispose d'une fonction optique continue modifiée par le clip-on, sur l'ensemble du champ de vision assuré par le verre progressif. On entend ici par fonction optique continue ou absence de discontinuité le fait que les paramètres optiques en cause sont des fonctions continues de la direction du regard. Ceci s'applique notamment à la puissance optique, et en conséquence aux autres paramètres optiques de la lentille.

A l'inverse des solutions de l'état de la technique, qui reposent sur une approximation de la résultante dioptrique de l'ensemble formé par du verre et du clip-on, la solution de l'invention permet de prendre en compte les propriétés optiques de la combinaison du clip-on et du verre. Cette prise en compte permet d'améliorer, pour le porteur, le résultat obtenu. En outre, l'utilisation des propriétés optiques de la combinaison du clip-on et du verre permet d'offrir au porteur des solutions plus diverses que dans l'état de la technique.

De façon connue en soi, en tout point d'une surface asphérique, on définit une sphère moyenne D donnée par la formule :

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la formule :

$$C = (n-1)\left|\frac{1}{R_1} - \frac{1}{R_2}\right|$$

La sphère moyenne et le cylindre sont des paramètres surfaciques.

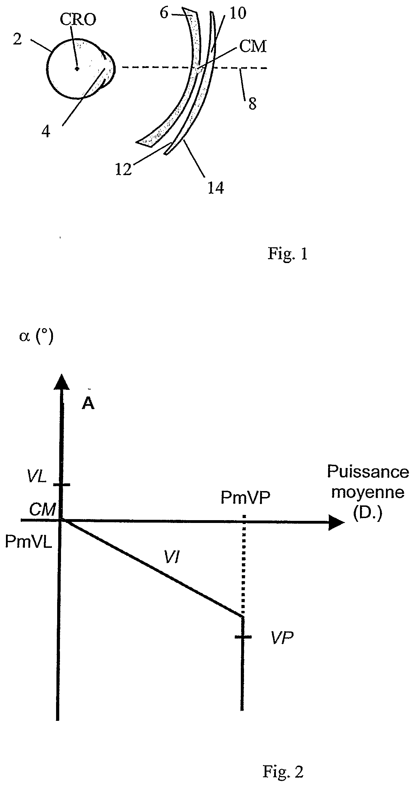

La figure 1 montre une représentation schématique d'un système verre-oeil, en coupe verticale. L'oeil 2 est modélisé par un centre de rotation, noté CRO sur la figure, un rayon et une pupille 4. Un modèle de l'oeil est par exemple proposé dans Accommodation-dependent model of the human eye with aspherics, R. Navarro, J. Santamaria and J. Bescos, Vol. 2, No 8 / August 1985, Opt. Soc. Am. A. ; classiquement, la position de l'oeil est définie par deux angles α et β, représentatifs des rotations verticale et horizontale de l'oeil par rapport à la direction de regard primaire. Un verre 6 est positionné dans une monture, devant l'oeil. Le positionnement du verre devant l'oeil est défini classiquement par les paramètres distance du centre de rotation de l'oeil à la surface arrière - distance CRO-verre -, par l'angle d'inclinaison du verre avec la verticale ou angle pantoscopique et par l'angle d'inclinaison avec l'horizontale ou angle de galbe. On peut utiliser classiquement des valeurs de 27 mm, 12° et 0° pour la distance CRO-verre, l'angle d'inclinaison et le galbe. Le verre est monté en respectant l'alignement de la direction de regard primaire avec une croix de montage située sur le verre ; ceci est représenté sur la figure 1, où l'on a porté la direction de regard primaire 8 et la croix de montage CM sur la surface avant du verre.

La figure 1 montre encore un clip-on 10 disposé devant le verre 6, avec une surface avant 14 et une surface arrière 12. On n'a pas représenté à la figure le dispositif de montage détachable du clip-on sur la monture. Ce dispositif peut comprendre une ou plusieurs des solutions existantes décrites dans l'état de la technique mentionné plus haut.

On définit pour un porteur un ergorama, qui représente un modèle d'espace objet. Pour chaque direction du regard, c'est-à-dire pour chaque couple (α, β), l'ergorama fournit une proximité objet. Pour plus de détails sur la construction d'un ergorama, on pourra consulter le document WO-A-98 12590 (US-A-6 318 859). On définit alors une méridienne comme l'ensemble des couples (α, β) des positions de l'oeil lorsque le porteur regarde au travers du verre les points du plan sagittal pour des distances données par l'ergorama.

Compte tenu de l'ergorama, d'un modèle de l'oeil et de la position du verre, on peut calculer des paramètres optiques du verre, comme expliqué par exemple dans la demande EP-A-0 990 939 en référence aux figures 1 à 3, ou encore dans la demande WO-A-98 12 590 (US-A-6 318 859) en référence à la figure 1. Spécifiquement, on définit une sphère des sommets comme la sphère centrée sur le centre de rotation de l'oeil et tangente au verre à la croix de montage. Pour une direction du regard (α, β), on considère un point M objet à une distance objet donnée par l'ergorama. On détermine les points S et T entre lesquels se forme l'image de l'objet. Le rayon passant par le centre de rotation de l'oeil et le point M coupe la sphère des sommets en un point J. La proximité image PI est alors donnée par

$$PI = \frac{1}{2}\left(\frac{1}{JT} + \frac{1}{JS}\right)$$

tandis que la proximité objet PO est l'inverse de la distance entre le point M et le point J de la sphère des sommets. La puissance est définie comme la somme des proximité objet et image, soit :

$$P = PO + PI = \frac{1}{MJ} + \frac{1}{2}\left(\frac{1}{JT} + \frac{1}{JS}\right)$$

L'amplitude de l'astigmatisme est donnée par :

$$A = \left| \frac{1}{JT} - \frac{1}{JS} \right|$$

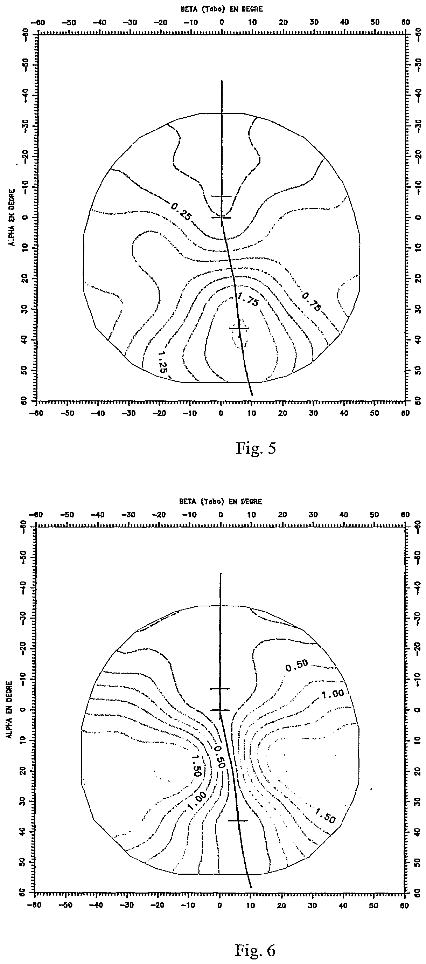

L'angle de l'astigmatisme est l'angle mesuré dans un repère lié à l'oeil, par rapport à la direction horizontale, avec lequel se forme l'image T, dans le plan vertical lié à l'oeil. Ces définitions de puissance et d'astigmatisme sont des définitions optiques, dans les conditions du porté et dans un repère lié à l'oeil. Qualitativement, la puissance et l'astigmatisme ainsi définis correspondent aux caractéristiques d'une lentille mince, qui placée à la place de la lentille dans la direction du regard, fournirait localement les mêmes images. On remarque que la définition fournit, dans la direction primaire du regard, la valeur classique de l'astigmatisme.
La puissance et l'astigmatisme ainsi définis peuvent être mesurées expérimentalement sur la lentille en utilisant un frontofocomètre ; elles peuvent aussi être calculées par tracé de rayons dans les conditions du porté.
A l'aide de ces paramètres, on définit la fonction optique d'un verre par les valeurs de puissance et d'astigmatisme pour l'ensemble des directions du regard, comme représenté par exemple aux figures 5 et 6.
Considérons l'exemple d'un verre progressif destiné à un porteur presbyte ; le verre présente un point de référence pour la vision de loin, conventionnellement noté VL et un point de référence pour la vision de près, conventionnellement noté VP. Entre ces deux points, le verre présente une zone de vision intermédiaire conventionnellement notée VI ; cette zone de vision intermédiaire relie une zone de vision de loin contenant le point VL et une zone de vision de près contenant le point VP. Le verre est adapté à un porteur presbyte dont la prescription est SVL, CVL et AVL (sphère, cylindre et axe) en vision de loin, et SVP, CVP et AVP en vision de près. De façon générale, l'addition nominale ADD est donnée par la différence SVP - SVL entre la sphère prescrite en vision de loin et la sphère prescrite en vision de près ; la prescription d'astigmatisme - cylindre et axe - est identique en vision de loin et en vision de près, ce qui s'écrit CVP=CVL et AVP=AVL. La puissance moyenne correctrice est alors SmVL=SVL+CVL/2 en vision de loin et SmVP=SVP+CVP/2=SmVL+ADD en vision de près.
La figure 2 montre un profil optique schématique en puissance moyenne d'un verre progressif ; on a porté sur le graphe de la figure 2 suivant l'axe des abscisses la puissance du verre et suivant l'axe des ordonnées l'abaissement du regard ou angle α. Comme le montre la figure, la puissance optique est sensiblement constante pour des directions du regard au-dessus de la direction de regard primaire, c'est-à-dire pour des valeur négatives de l'angle α avec les notations proposées ici. La puissance optique présente la valeur PmVL à rapprocher de la correction SmVL mentionnée plus haut. Lorsque la direction du regard baisse, la puissance optique croît jusqu'à atteindre une valeur sensiblement constante dans la zone de vision de près, qui présente la valeur PmVP à rapprocher de SmVP discutée plus haut. On a porté sur le graphe les valeurs des angles α pour la croix de montage ainsi que pour les points VL et VP de référence pour la vision de loin et pour la vision de près.

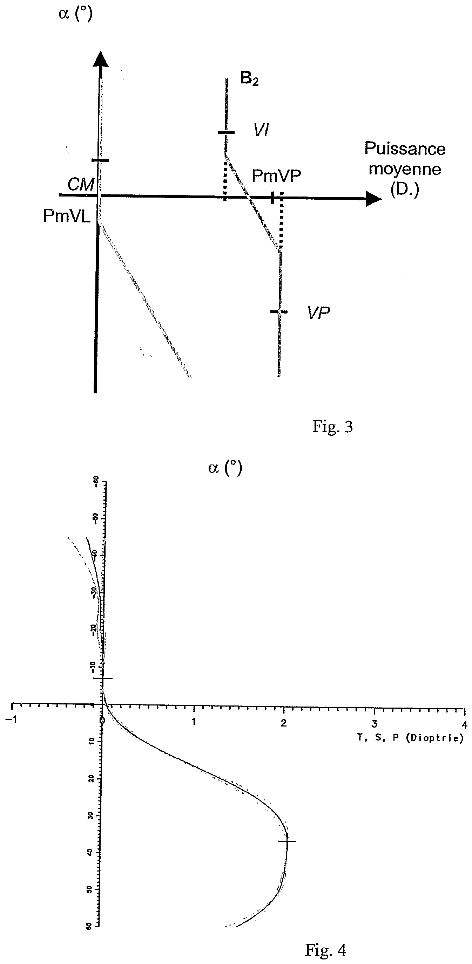

La figure 3 montre, avec les mêmes notations, des profils optiques schématiques en puissance moyenne de verres spécialisés ; on a représenté, sur la partie gauche de la figure le profil d'un verre spécialisé dédié à la conduite automobile. Comme la figure 3 le montre, le verre présente une zone de vision de loin qui s'étend plus bas qu'un verre progressif du genre de celui de la figure 2. Dans la partie inférieure du verre spécialisé, la puissance croît pour assurer une vision intermédiaire. Le verre spécialisé ne présente pas de zone de vision de près. Sur la partie droite de la figure, on a représenté le profil d'un verre spécialisé dédié au travail sur ordinateur. Par rapport au profil représenté à la figure 2, le verre spécialisé présente dans sa partie supérieure, au-dessus du point VL du verre progressif classique, une zone de puissance constante mais supérieure en valeur relative à celle nécessaire à la correction en vision de loin du porteur ; cette zone permet une vision intermédiaire. Dans sa partie inférieure, le verre spécialisé présente une zone de vision de près, disposée un peu plus haut que la zone de vision de près d'un verre progressif classique. Un tel profil optique est décrit plus en détail dans la demande de brevet FR-A-2 769 997.
Les figures 4 à 6 montrent les caractéristiques optiques d'un verre progressif de l'état de la technique ; il s'agit d'un verre formé d'une surface du type vendu par la demanderesse sous la référence Varilux Panamic et communément utilisé pour une prescription plan addition 2.00 dioptrie. Le verre choisi à titre d'exemple présente une puissance moyenne en vision de loin de zéro dioptrie et une addition nominale de 2 dioptries. La figure 4 montre un graphe de puissance porteur suivant la méridienne, pour un verre progressif de l'état de la technique ; on a représenté en ordonnées l'angle α et en abscisses la puissance optique. Le graphe montre les valeurs de T, S et P le long de la méridienne, en dioptries. Le profil de la figure 4 est du genre représenté schématiquement à la figure 2. La figure 5 montre une carte de la puissance porteur, pour le verre progressif de la figure 4 ; on a représenté en abscisses l'angle β de rotation de l'oeil autour d'un axe vertical passant par le centre de rotation de l'oeil ; on a représenté en ordonnées l'angle α de rotation de l'oeil autour d'un axe horizontal passant par le centre de rotation de l'oeil. La figure 5 montre pour les différentes valeurs du couple (α, β) les lignes de même puissance porteur, graduées de 0,25 dioptrie en 0,25 dioptrie. On reconnaît sur la figure la zone de vision de loin - dans la partie haute du verre au-dessus de la ligne de puissance porteur à 0,50 dioptries ; on reconnaît aussi dans la partie basse du verre la zone de vision de près, autour du point de référence pour la vision de près. On a en outre représenté à la figure la croix de montage, pour des valeurs (0, 0) du couple (α, β), le point de référence pour la vision de loin, pour une valeur de α de l'ordre de 8° au-dessus de la croix de montage et une valeur de β nulle. Enfin, on a porté à la figure le point de référence pour la vision de près, qui est décalé du côté nasal du verre. La figure 6 montre, avec les mêmes notations, une carte de l'astigmatisme résultant, pour le verre progressif de la figure 4 ; de nouveau, les lignes d'isoastigmatisme résultant sont représentées avec un pas de 0,25 dioptries. Le verre présente une épaisseur au centre de 2,53 mm ; au point de référence pour la vision de loin, le verre présente une puissance moyenne de -0,04 dioptries et un astigmatisme résultant de 0,01 dioptrie. Au point de référence pour la vision de près, la puissance moyenne est de 2,02 dioptries et l'astigmatisme résultant vaut 0,03 dioptries.

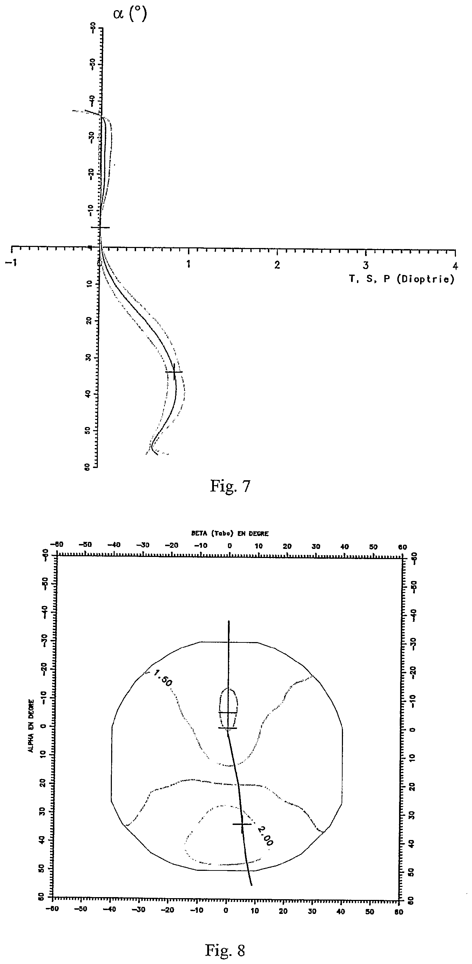

Les figures 7 à 9 montrent un graphe et des cartes similaires à celles des figures 4 à 6, pour un premier verre spécialisé de l'état de la technique ; on reconnaît sur la figure 7 un profil du genre représenté sur la partie droite de la figure 3. Le premier verre spécialisé est un verre destiné au travail en vision intermédiaire, adapté à un porteur présentant une prescription d'addition de 2,00 dioptries. La progression de puissance porteur sur le verre spécialisé vaut 0,80 dioptrie et est inférieure à la prescription d'addition du porteur. Les cartes d'isopuissance et d'isoastigmatisme montrent des lignes séparées de 0,25 dioptrie. Le verre présente une épaisseur au centre de 2,20 mm ; au niveau la vision intermédiaire - dont la position est approximativement 6° au-dessus du centre - le verre présente une puissance moyenne de 1,22 dioptries et un astigmatisme résultant de 0,01 dioptrie. Au niveau de la vision de près, la puissance moyenne est de 2,08 dioptries et l'astigmatisme résultant vaut 0,15 dioptrie.

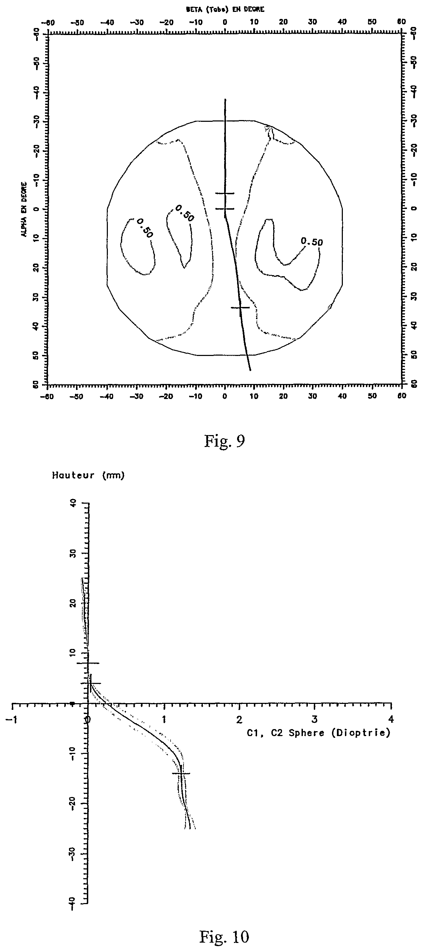

Les figures 10 à 12 montrent les caractéristiques de la surface arrière d'un premier clip-on, permettant de transformer la fonction optique du verre progressif des figures 4 à 6 en celle du premier verre spécialisé des figures 7 à 9. Le clip-on présente une surface avant sphérique et une surface arrière afocale. La surface arrière est optimisée pour assurer la fonction optique requise à l'ensemble du verre et du clip-on monté sur le verre. La figure 10 montre un graphe de la sphère moyenne suivant la méridienne pour la surface arrière du clip-on ; la méridienne est définie optiquement, comme plus haut. La figure montre en traits pleins la sphère moyenne et en traits interrompus les valeurs $1/R_1$ et $1/R_2$ des courbures maximale et minimale ; ces valeurs sont portées en dioptries le long de l'axe des abscisses et sont données valeurs relatives par rapport à la sphère moyenne au point situé à 8mm au-dessus du centre du verre. En ordonnées, le graphe est gradué en mm et montre l'ordonnée sur le verre, dans un repère orthonormé dont les axes (x, y) représente l'horizontale et la verticale, le plan (x, y) étant tangent à la surface du verre en son centre. La figure montre que la sphère moyenne dans la partie supérieure du verre est sensiblement constante, et croît pour atteindre une valeur de l'ordre de 1,20 dioptries dans la partie basse du verre. Au point de coordonnées (0 mm, 8 mm) sur le verre, la sphère moyenne vaut 3,53 dioptries et le cylindre vaut 0,02 dioptries. Au point de coordonnées (0, 4 mm) dans le repère (x, y), la sphère moyenne vaut 3,57 dioptries et le cylindre 0,04 dioptrie. A hauteur du point de contrôle pour la vision de près de coordonnées (2,561 mm, -14 mm) dans le repère (x, y), la sphère moyenne est de 4,75 dioptries et le cylindre vaut 0,06 dioptrie.

La surface avant du clip-on est sphérique et présente une courbure de 4,74 dioptries. Le clip-on est formé dans le matériau référencé Orma fourni par la société Essilor, d'un indice de 1,502. L'épaisseur du clip-on est de 1,50 mm.

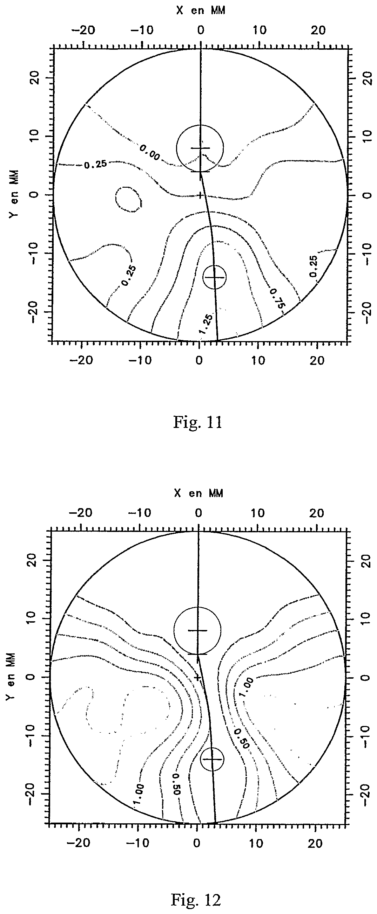

Les figures 11 et 12 montrent des cartes de sphère moyenne et de cylindre de la surface arrière du clip-on de la figure 10 ; sont portées en abscisses et en ordonnées les coordonnées en mm dans le repère (x, y) mentionné plus haut. Les lignes d'isocylindre et d'isosphère sont tracées avec un pas de 0,25 dioptries.

Le clip-on des figures 10 à 12 est obtenu par optimisation optique de l'ensemble verre et clip-on, dans les conditions du porté, comme expliqué plus bas.

Le fait d'utiliser une optimisation optique permet d'assurer au porteur une fonction optique plus précise que celle qui pourrait être obtenue par une simple approximation de la combinaison de l'ensemble, ou que celle obtenue par une optimisation du clip-on indépendamment du verre sur lequel il est monté.

[0]L'invention permet de transformer la fonction optique de base en une fonction optique adéquate au besoin spécifique. A l'inverse des solutions de l'état de la technique décrites plus haut, l'invention assure une maîtrise de l'ensemble de la fonction optique du système verre et clip-on, notamment à la périphérie du système.

L'optimisation peut s'effectuer de la façon suivante. On commence par considérer le verre adapté à la prescription du porteur, dans une position standard par rapport à un modèle de l'oeil, comme expliqué en référence à la figure 1. On dispose ensuite le clip-on devant le verre ; la position du clip-on par rapport au verre peut dépendre du système d'accrochage du clip-on sur la monture du verre, si différents systèmes d'accrochages fournissent des positions différentes du clip-on par rapport à la monture ou au verre. Une fois le clip-on disposé devant le verre, on définit le clip-on par optimisation, en utilisant comme cible dans l'optimisation la fonction optique souhaitée pour l'ensemble du verre et du clip-on. Cette fonction optique souhaitée peut être déterminée à l'aide d'une description de l'espace et de l'analyse de l'activité. On en déduit la fonction optique souhaitée la mieux adaptée à l'activité en cause.

L'optimisation s'effectue à l'aide d'un logiciel de tracé de rayons, qui permet de déterminer la puissance porteur et l'astigmatisme résultant de l'ensemble du verre et du clip-on, pour une forme donnée du clip-on. On peut aussi utiliser tout autre outil connu en soi qui permet de simuler la fonction optique d'un système optique. L'optimisation s'effectue de façon connue en soi, en suivant les méthodes d'optimisation optique décrites par exemples dans ALLIONE P., AHSBAHS F., LE SAUX G. : Application of optimization in computer_aided ophthalmic lens design, In Design and Engineering of Optical Systems II (Merkle Editor, SPIE Proceedings SERIES Vol. 3737, Berlin 1999), pp. 138-148.

On procède ainsi à une optimisation optique, sans approximations dans le calcul du clip-on ; en particulier, à l'inverse de l'état de la technique, on ne se place pas dans l'approximation des lentilles minces. Les entrées utilisées dans l'optimisation sont les descriptions précises du verre initial et de la fonction optique souhaitée.

On peut encore prévoir sur le clip-on un traitement spécifique, si l'activité à laquelle le système est destiné nécessite un tel traitement. Par exemple, pour un verre destiné à la conduite automobile ou à des activités en extérieur, on peut munir le clip-on d'un traitement solaire ou d'un traitement polarisant. On pourrait aussi prévoir un traitement "réhausseur de contraste" pour le travail sur écran ou encore un dégradé neutre pour le golf. Ce traitement peut être prévu sur l'une ou l'autre des surfaces du clip-on. Par ailleurs, les normes, comme celles de résistance aux chocs, ne s'appliquent pas sur le clip-on, qui peut donc être peu épais. Dans les exemples ci-dessous, le clip-on présente une épaisseur de 1,50 mm au centre ; il est plus généralement avantageux qu'il présente une épaisseur inférieure ou égale à 2.5 mm.

Dans l'exemple ci-dessus, la surface avant du clip-on est sphérique et l'optimisation s'effectue sur la surface arrière du clip-on. Ceci présente l'avantage de fournir pour l'ensemble du verre et du clip-on une surface avant sphérique. On pourrait aussi optimiser la surface avant du clip-on, ou répartir la fonction optique sur la surface avant et sur la surface arrière du clip-on. On peut aussi obtenir la fonction optique du clip-on par d'autres types d'éléments optiques tels que diffractifs, gradient d'indice et autres.

Le clip-on de l'invention est optimisé pour un verre progressif donné. Toutefois, il est aussi utilisable pour d'autres verres, dans la mesure où ils présentent un profil de puissance le long de la méridienne proche de celui du verre progressif utilisé pour l'optimisation. Dans l'exemple ci-dessus, le clip-on est optimisé pour un verre commercialisé sous la référence Varilux Panamic. Le clip-on serait aussi utilisable pour un verre du genre commercialisé sous la référence Varilux Comfort, qui présente un profil de puissance analogue le long de la méridienne et au voisinage de celle-ci. Bien entendu, une telle utilisation du même clip-on n'assurerait la fonction optique que dans la partie du verre Varilux Comfort qui présente une fonction optique analogue à celle du verre Varilux Panamic. S'agissant d'une approximation, il est donc préférable, dans la mesure du possible de prévoir une optimisation fonction du verre de base, avec lequel est optimisé le clip-on.

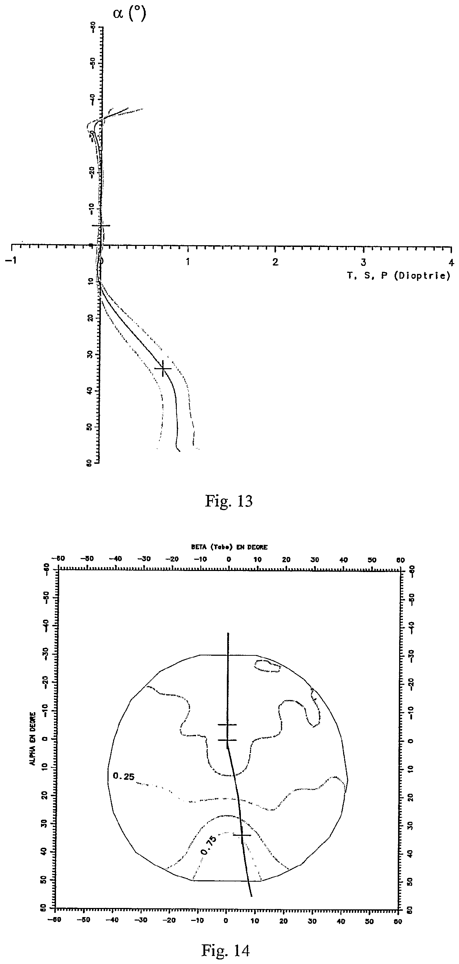

Les figures 13 à 15 montrent un graphe et des cartes similaires à celles des figures 4 à 6, pour un deuxième verre spécialisé de l'état de la technique. Le verre des figures 13 à 15 est un verre dédié à la conduite automobile, du genre décrit dans la demande de brevet français 04 06 002 mentionnée plus haut. Le verre est adapté à un porteur présentant une prescription d'addition de 2,00 dioptries. La progression nominale de puissance porteur sur le verre spécialisé vaut 0,72 dioptrie et est inférieure à la prescription d'addition du porteur. Les cartes d'isopuissance et d'isoastigmatisme montrent des lignes séparées de 0,25 dioptrie. Le verre présente une épaisseur au centre de 2,07 mm ; au niveau de la vision de loin - dont la position est approximativement 6° au-dessus du centre - le verre présente une puissance moyenne de - 0,02 dioptrie et un astigmatisme résultant de 0,04 dioptrie. Au niveau de la vision intermédiaire, pour un abaissement de regard d'environ 33° et une direction nasale d'environ 6°, la puissance moyenne est de 0,70 dioptries et l'astigmatisme résultant vaut 0,34 dioptrie.

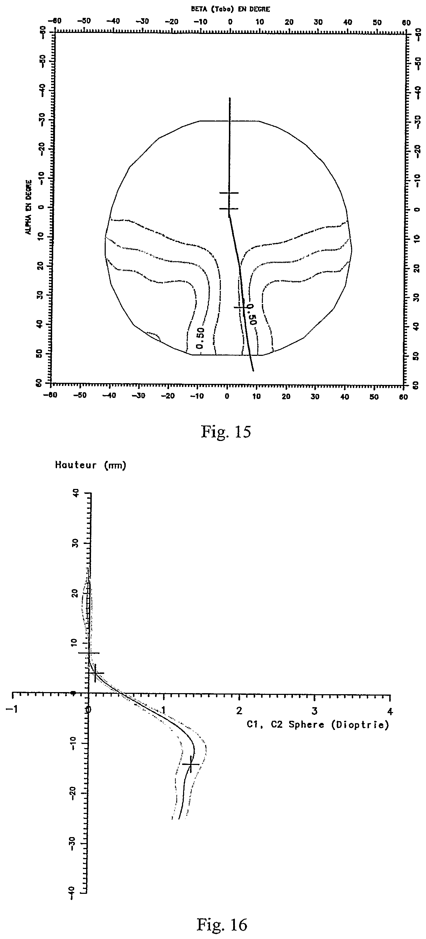

Les figures 16 à 18 sont similaires aux figures 10 à 12. Elles montrent les caractéristiques de la surface arrière d'un deuxième clip-on, permettant de transformer la fonction optique du verre progressif des figures 4 à 6 en celle du deuxième verre spécialisé des figures 13 à 15. Comme dans l'exemple précédent, le clip-on présente une surface avant sphérique et une surface arrière afocale. La surface arrière est optimisée de sorte à assurer la fonction optique requise pour l'ensemble du verre et du clip-on monté sur le verre. La figure 16 montre un graphe de la sphère moyenne suivant la méridienne pour la surface arrière du clip-on ; les conventions sont les mêmes qu'à la figure 10. La figure montre que la sphère moyenne dans la partie supérieure du verre est sensiblement constante, et croît pour atteindre une valeur de l'ordre de 1,37 dioptries dans la partie basse du verre. Au point de coordonnées (0 mm, 8 mm) sur le verre, la sphère moyenne vaut 4,73 dioptries et le cylindre vaut 0,05 dioptries. Au point de coordonnées (0, 4 mm) dans le repère (x, y), la sphère moyenne vaut 4,82 dioptries et le cylindre 0,08 dioptrie. A hauteur du point de contrôle pour la vision intermédiaire de coordonnées (2,561 mm, -14 mm) dans le repère (x, y), la sphère moyenne est de 6,10 dioptries et le cylindre vaut 0,30 dioptrie.

La surface avant du clip-on est sphérique et présente une courbure de 4,74 dioptries. Le clip-on est formé dans le matériau référencé Orma fourni par la société Essilor, d'un indice de 1,502. L'épaisseur du clip-on est de 1,50 mm.

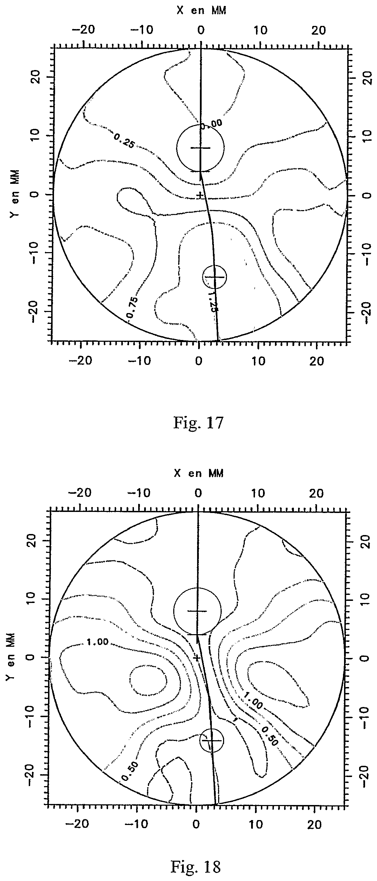

Les figures 17 et 18 montrent des cartes de sphère moyenne et de cylindre de la surface arrière du clip-on de la figure 16, avec les mêmes notations qu'aux figures 11 et 12. Les lignes d'isocylindre et d'isosphère sont tracées avec un pas de 0,25 dioptries.

Au montage, il suffit que la précision de positionnement du clip-on par rapport au verre soit du même ordre que celle d'une croix de montage d'un verre progressif en face de l'oeil. Ceci est facilement obtenu avec les techniques classiques de montage des clip-on sur les montures. Le calcul du clip-on tient avantageusement compte de toutes les cinématiques entre le premier dioptre (la face avant du clip-on dans l'exemple) et l'oeil.

L'exemple des figures 16 à 18 permet de fournir au porteur de l'ensemble verre et clip-on la fonction optique du verre décrit aux figures 13 à 15. Comme expliqué en référence au premier exemple, l'utilisation pour la définition du clip-on d'une optimisation optique assure que la fonction optique cible est effectivement atteinte lorsque le porteur est muni de l'ensemble du verre et du clip-on.

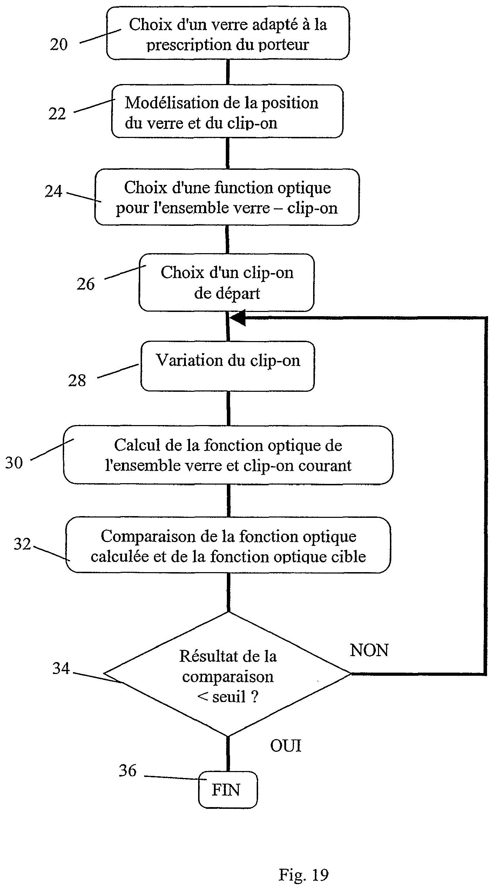

La figure 19 est un ordinogramme du procédé de l'invention. A l'étape 20, on choisit un verre 6 adapté à la prescription du porteur. Ce verre, dans les exemples proposés plus haut, est le verre dont la fonction optique est représentée aux figures 4 à 6.

A l'étape 22, on modélise la position du verre 6 choisi et d'un clip-on 10 devant le verre choisi. Ceci peut s'effectuer, comme expliqué plus haut, en considérant une distance entre le centre de rotation de l'oeil et la surface arrière du verre choisi, un angle d'inclinaison et un galbe. On peut choisir des valeurs standard, comme plus haut, ou des valeurs adaptées à un porteur donné dans des conditions particulières. La position du clip-on peut aussi dépendre du système de fixation du clip-on sur la monture du verre choisi.

A l'étape 24, on choisit une fonction optique pour l'ensemble du verre choisi et du clip-on. Dans les exemples, cette étape correspond au choix de la fonction optique des figures 7 à 9 ou 13 à 15.

Aux étapes 26 à 34, on calcule les caractéristiques du clip-on par optimisation optique pour un porteur standard, en utilisant comme cible d'optimisation la fonction optique choisie. Pour cela, on choisit d'abord à l'étape 26 un clip-on de départ ; on peut par exemple considérer un clip-on présentant :

- une surface avant 14 sphérique,
- une surface arrière 12 modélisée par une nappe de polynômes de Zernike, ou par une modélisation utilisant les B-Splines.

Des polynômes de Zernike sont par exemple décrits dans F. ZERNIKE, Beugungstheorie des Schneidenverfahrens und seiner verbesserten Form, der Phasenkontrastmethode, Physica, 1, p. 689-704, 1934. Les références relatives aux B-Splines incluent C. De Boor, A practical guide to Splines, Applied Mathematical Sciences 27, Springer-Verlag, New-York, 333-359, 1978. La surface arrière peut presser une sphère moyenne au centre de même valeur que la sphère de la face avant du verre ; ceci facilite un bon positionnement du clip-on par rapport au verre et limite l'épaisseur totale de l'ensemble verre et clip-on. Le clip-on de départ peut présenter une épaisseur entre les deux faces de 1,5 mm.

A l'étape 28, on fait varier la nappe de polynômes représentant la surface arrière du clip-on. A la première itération, on fait varier le clip-on de départ choisi à l'étape 26. Pour les itérations suivantes, on considère le clip-on courant déterminé lors de l'itération précédente.

A l'étape 30, on calcule par tracé de rayons la fonction optique de l'ensemble du verre choisi et du clip-on, tel que modifié à l'étape 28.

A l'étape 32, on compare la fonction optique calculée à l'étape 28 et la fonction optique cible choisie à l'étape 24. Cette comparaison peut s'effectuer en choisissant des points dans l'espace objet, c'est-à-dire des directions du regard, et en sommant les carrés des différences entre la puissance porteur et l'astigmatisme résultant pour chacun des points choisis. La somme constitue la "fonction de mérite" du système utilisée au cours de l'optimisation. On peut par exemple choisir 1500 points répartis comme suit dans l'espace objet :

- 250 points le long de la méridienne ;
- 1250 points dans le reste de l'espace objet.

A l'étape 34, on vérifie si le résultat de la comparaison est inférieur à une valeur de seuil. On peut, dans l'exemple précédent, considérer une valeur de seuil de $10^{-5}$ dioptries$^2$ - cette valeur de seuil pouvant varier en fonction de l'optimisation recherchée. Si le résultat n'est pas inférieur à la valeur de seuil, on repasse à l'étape 28. Sinon on passe à l'étape 36, le clip-on étant défini par les valeurs courantes obtenues.

Pour une fonction optique du genre de celles discutées plus haut, on arrive à optimiser le clip-on en 15 itérations, avec la différence mentionnée plus haut entre la fonction optique calculée et la fonction optique cible.

Le clip-on ainsi défini est fabriqué par une technique conventionnelle, par exemple par moulage d'un polymère, ou encore par usinage direct du clip-on (technique "freeform").

Bien entendu, la présente invention n'est pas limitée aux modes de réalisations décrits à titre d'exemple ; comme mentionné plus haut, on peut optimiser la surface avant du clip-on, voire répartir la fonction optique du clip-on sur la surface avant et la surface arrière de celui-ci.

Dans les exemples ci-dessus, on a considéré la même méridienne pour toutes les simulations afin d'analyser les différentes cartes le long de la même "section" verticale. Il ne s'agit que d'une approximation permettant une comparaison des fonctions optiques. En réalité, les zones de vision ne sont pas centrées identiquement entre un verre progressif classique et un verre spécialisé. Par exemple, les verres Interview et Carlens sont symétriques, contrairement à un verre progressif classique dont la zone de vision de près est décentrée nasalement. Le clip-on permet aussi de translater les zones de vision, pour passer par exemple d'un verre progressif classique avec une vision de près décentrée à un ensemble présentant la fonction optique d'un verre spécialisé sans décentrement de la zone de vision de près. On comprend donc que l'optimisation peut s'effectuer non seulement en modifiant les cibles de puissance et d'astigmatisme dans l'espace objet, mais aussi en modifiant la méridienne.

Dans les exemples d'optimisation, on a considéré un clip-on avec des variations de puissance sur l'une des faces. Sont aussi mentionnés pour le clip-on l'utilisation d'éléments réfractifs, diffractifs ou à gradients d'indice. De la même façon, l'invention s'applique quelle que soit la réalisation de la fonction optique du verre de base - répartition de la fonction optique sur l'une ou les deux surfaces du verre de base, utilisation d'éléments réfractifs, diffractifs ou à gradients d'indice.

**Revendications**

1. Un procédé de définition d'une face supplémentaire (10) pour lunettes combinée à un verre (6) adapté pour être monté dans une monture des lunettes, comprenant les étapes de :

> - choix (20) du verre (6) adapté à la prescription d'un porteur, le verre (6) étant un verre progressif présentant un centre optique ou géométrique;
> - modélisation (22) de la position du verre (6) choisi et de la position de la face supplémentaire (10) devant le verre choisi ;
> - choix (24) d'une fonction optique pour l'ensemble du verre (6) choisi et de la face supplémentaire (10) ;
> - calcul (26-34) des caractéristiques de la face supplémentaire (10) par optimisation optique pour un porteur standard, sans se placer dans l'approximation des lentilles minces,

> dans lequel l'étape de calcul (26-34) comprend les sous-étapes suivantes :

> > • calcul (30), à l'aide d'un logiciel de tracé de rayons, d'une fonction optique calculée pour l'ensemble du verre (6) choisi et de la face supplémentaire (10), ledit logiciel permettant de déterminer la puissance porteur et l'astigmatisme résultant dudit ensemble, et
> > • comparaison (32) de la fonction optique calculée à la sous-étape de calcul (30) et de la fonction optique choisie à l'étape de choix (24), en utilisant comme cible d'optimisation ladite fonction optique choisie pour ledit ensemble ;

> dans lequel la face supplémentaire (10) obtenue est montée de manière détachable devant et sur le verre (6), présente une surface au moins égale à la surface du verre progressif (6) et une variation de puissance optique continue sur cette surface, de sorte que l'ensemble du verre (6) et de la face supplémentaire (10) ne génère pas de discontinuité dans la fonction optique fournie au porteur qui est continue sur l'ensemble du champ de vision assuré par le verre (6), et dans lequel la face supplémentaire obtenue translate les zones de vision, pour passer du verre progressif (6) avec une vision de près décentrée nasalement audit ensemble sans décentrement nasal de la zone de vision de près, l'optimisation permettant de transformer la fonction optique du verre et pouvant s'effectuer en modifiant la méridienne pour ledit ensemble.

2. Le procédé de la revendication 1, dans lequel l'étape de calcul (26-34) comprend en outre:

> - avant la sous-étape de calcul (30), les sous-étapes suivantes :

> > • choix (26) d'une face supplémentaire de départ, et
> > • variation (28) de la face supplémentaire de départ choisie, en une première itération ; et

> - après la sous-étape de comparaison (32), les sous-étapes suivantes :

> > • vérification (34) si le résultat de la comparaison est inférieur à une valeur de seuil, et
> > • si la réponse à la sous-étape de vérification (34) est oui, fin de l'étape de calcul (26-34) où la face supplémentaire est définie par les valeurs courantes obtenues, ou
> > • si la réponse à la sous-étape de vérification (34) est non, retour à la sous-étape de variation (28) où l'on fait varier la face supplémentaire courante.

3. Le procédé de la revendication 1, dans lequel l'étape de calcul (26-34) s'effectue par optimisation d'une surface avant ou arrière (12, 14) de la face supplémentaire (10).

4. Le procédé de la revendication 2, dans lequel la surface optimisée est la surface arrière (12) de la face supplémentaire voisine du verre (6).

5. Le procédé de la revendication 3 ou 4, dans lequel la surface (14) de la face supplémentaire autre que la surface (12) optimisée est sphérique.

6. Le procédé de l'une des revendications 1 à 3, dans lequel la face supplémentaire présente une surface arrière (12) sphérique présentant une sphère égale à la sphère de la face avant du verre (6) au dit centre.

7. Le procédé de la revendication 6, dans lequel la face supplémentaire (10) présente une épaisseur au centre inférieure ou égale à 2.5 mm.

8. Le procédé de la revendication 6 ou 7, dans lequel la face supplémentaire (10) présente un traitement de surface sur au moins une de ses surfaces.

9. Ensemble d'une face supplémentaire (10) pour lunettes et d'un verre (6) monté dans une monture de lunettes, le verre (6) étant un verre progressif adapté à la prescription d'un porteur et présentant un centre optique ou géométrique,

dans lequel la face supplémentaire (10) est définie et montée de manière détachable devant et sur le verre (6) selon le procédé de l'une des revendications 1 à 8,

dans lequel la face supplémentaire (10) présente une surface au moins égale à la surface du verre (6) et une variation de puissance optique continue sur cette surface, de sorte que ledit ensemble ne génère pas de discontinuité dans la fonction optique fournie au porteur qui est continue sur l'ensemble du champ de vision assuré par le verre (6), et

dans lequel la face supplémentaire translate les zones de vision, pour passer du verre progressif (6) avec une vision de près décentrée nasalement audit ensemble sans décentrement nasal de la zone de vision de près.

10. Ensemble selon la revendication 9, dans lequel la face supplémentaire (10) présente une dite surface arrière (12) sphérique présentant une sphère égale à la sphère de la face avant du verre (6) au dit centre.

**Patentansprüche**

1. Verfahren zum Definieren einer Ergänzungsvorderseite (10) für Brillen, kombiniert mit einem Glas (6), das dazu vorgesehen ist, in einer Fassung der Brillen montiert zu werden, umfassend die folgenden Schritte:

   - Auswahl (20) des Glases (6), das an die Verschreibung eines Trägers angepasst ist, wobei das Glast (6) ein Gleitsichtglas ist, das einen optischen oder geometrischen Mittelpunkt aufweist;
   - Modellieren (22) der Position des ausgewählten Glases (6) und der Position der Ergänzungsvorderseite (10) vor dem ausgewählten Glas;
   - Auswahl (24) einer optischen Funktion für die Einheit des ausgewählten Glases (6) und der Ergänzungsvorderseite (10);
   - Berechnung (26-34) der Eigenschaften der Ergänzungsvorderseite (10) durch optische Optimierung für einen Standard-Träger, ohne sich in die Näherung der dünnen Linsen zu begeben, bei dem der Berechnungsschritt (26-34) die folgenden Unterschritte umfasst:

      • mit Hilfe einer Ray-Tracing-Software Berechnung (30) einer optischen Funktion, die für die Einheit des ausgewählten Glases (6) und der Ergänzungsvorderseite (10) berechnet wird, wobei es die Software ermöglicht, die Trägerstärke und den resultierenden Astigmatismus der Einheit zu bestimmen, und
      • Vergleich (32) der in dem Berechnungsunterschritt (30) berechneten optischen Funktion und der in dem Auswahlschritt (24) ausgewählten optischen Funktion unter Verwendung der für die Einheit ausgewählten optischen Funktion als Optimierungsziel;

bei dem die erhaltene Ergänzungsvorderseite (10) lösbar vor und auf dem Glas (6) montiert ist, eine Oberfläche mindestens gleich der Oberfläche des Gleitsichtglases (6) und eine kontinuierliche Variation einer optischen Stärke auf dieser Oberfläche aufweist, so dass die Einheit des Glases (6) und der Ergänzungsvorderseite (10) keine Diskontinuität in der dem Träger gelieferten optischen Funktion erzeugt, die auf der Gesamtheit des Sichtfeldes, das durch das Glas (6) gewährleistet ist, kontinuierlich ist, und

bei dem die erhaltene Ergänzungsvorderseite die Sichtzonen verschiebt, um von dem Gleitschichtglas (6) mit einer nasal dezentrierten Nahsicht zu der Einheit ohne nasale Dezentrierung der Nahsichtzone überzugehen, wobei es die Optimierung ermöglicht, die optische Funktion des Glases umzuformen, und durch Änderung des Meridians für die Einheit durchgeführt werden kann.

2. Verfahren nach Anspruch 1, bei dem der Berechnungsschritt (26-34) ferner umfasst:

   - vor dem Berechnungsunterschritt (30) die folgenden Unterschritte:

      • Auswahl (26) einer Anfangsergänzungsvorderseite, und
      • Variation (28) der ausgewählten Anfangsergänzungsvorderseite in einer ersten Iteration; und

- nach dem Vergleichsunterschritt (32) die folgenden Unterschritte:

• Überprüfung (34), ob das Ergebnis des Vergleichs kleiner als ein Grenzwert ist, und
• wenn die Antwort auf den Überprüfungsunterschritt (34) ja ist, Ende des Berechnungsschritts (26-34), in dem die Ergänzungsvorderseite durch die erhaltenen laufenden Werte definiert wird, oder
• wenn die Antwort auf den Überprüfungsunterschritt (34) nein ist, Rückkehr zum Variationsunterschritt (28), in dem die laufende Ergänzungsvorderseite variiert wird.

3. Verfahren nach Anspruch 1, bei dem der Berechnungsschritt (26-34) durch Optimierung einer Vorder- oder Rückseite (12, 14) der Ergänzungsvorderseite (10) erfolgt.

4. Verfahren nach Anspruch 2, bei dem die optimierte Fläche die Rückseite (12) der benachbarten Ergänzungsvorderseite des Glases (6) ist.

5. Verfahren nach Anspruch 3 oder 4, bei dem die Oberfläche (14) der Ergänzungsvorderseite mit Ausnahme der optimierten Fläche (12) sphärisch ist.

6. Verfahren nach einem der Ansprüche 1 bis 3, bei dem die Ergänzungsvorderseite eine sphärische Rückseite (12) aufweist, die eine Sphäre gleich der Sphäre der Vorderseite des Glases (6) im Mittelpunkt aufweist.

7. Verfahren nach Anspruch 6, bei dem die Ergänzungsvorderseite (10) eine Dicke im Mittelpunkt kleiner oder gleich 2,5 mm aufweist.

8. Verfahren nach Anspruch 6 oder 7, bei dem die Ergänzungsvorderseite (10) zumindest auf einer ihrer Seiten eine Oberflächenbehandlung aufweist.

9. Einheit einer Ergänzungsvorderseite (10) für Brillen und eines Glases (6), das in einer Brillenfassung montiert ist, wobei das Glas (6) ein Gleitsichtglas ist, das an die Verschreibung eines Trägers angepasst ist, und einen optischen oder geometrischen Mittelpunkt aufweist,
bei der die Ergänzungsvorderseite (10) vor und auf dem Glas (6) nach dem Verfahren nach einem der Ansprüche 1 bis 8 definiert und lösbar montiert ist,
bei der die Ergänzungsvorderseite (10) eine Oberfläche mindestens gleich der Oberfläche des Glases (6) und eine kontinuierliche Variation einer optischen Stärke auf dieser Oberfläche aufweist, so dass die Einheit keine Diskontinuität in der dem Träger gelieferten optischen Funktion erzeugt, die auf der Gesamtheit des Sichtfeldes, das durch das Glas (6) gewährleistet ist, kontinuierlich ist, und
bei dem die Ergänzungsvorderseite die Sichtzonen verschiebt, um von dem Gleitschichtglas (6) mit einer nasal dezentrierten Nahsicht zu der Einheit ohne nasale Dezentrierung der Nahsichtzone überzugehen.

10. Einheit nach Anspruch 9, bei der die Ergänzungsvorderseite (10) eine so genannte sphärische Rückseite (12) aufweist, die eine Sphäre gleich der Sphäre der Vorderseite des Glases (6) in dem Mittelpunkt aufweist.

## Claims

1. Method of defining a supplementary face (10) for spectacles combined with a lens (6) adapted to be mounted in a frame of the spectacles, said method comprising the steps of:

- selecting (20) the lens (6) adapted to the prescription of a wearer, the lens (6) being a progressive lens having an optical or geometric centre;
- modelling (22) the position of the selected lens (6) and the position of the supplementary face (10) in front of the selected lens;
- selecting (24) an optical function for the assembly composed of the selected lens (6) and of the supplementary face (10);
- calculating (26-34) the characteristics of the supplementary face (10) by optical optimization for a standard wearer, without involvement of thin-lens approximation,

in which the calculating step (26-34) comprises the following sub-steps:

• calculating (30), with the aid of ray-plotting software, an optical function calculated for the assembly composed of the selected lens (6) and of the supplementary face (10), said software making it possible to determine the wearer power and the astigmatism resulting from said assembly, and
• comparing (32) the optical function calculated at the calculating sub-step (30) and the optical function selected at the selection step (24), using as optimization target said optical function selected for said assembly;

in which the supplementary face (10) obtained is mounted detachably in front of and on the lens (6), has a surface at least equal to the surface of the progressive lens (6) and a continuous optical power variation over this surface, such that the assembly composed of the lens (6) and of the supplementary face (10) does not generate discontinuity in the optical function afforded to the wearer, which is continuous over the whole field of vision provided by the lens (6), and
in which the supplementary face obtained shifts the zones of vision in order to change from the progressive lens (6) with nasally off-centred near vision to said assembly without nasal off-centring of the near vision zone, the optimization making it possible to transform the optical function of the lens and being able to be effected by modifying the meridian for said assembly.

**2.** Method according to Claim 1, in which the calculating step (26-34) additionally comprises:

- before the calculating sub-step (30), the following sub-steps:

• selection (26) of a starting supplementary face, and
• variation (28) of the selected starting supplementary face, in a first iteration; and

- after the comparison sub-step (32), the following sub-steps:

• verification (34) as to whether the result of the comparison is below a threshold value, and
• if the answer at the verification sub-step (34) is yes, termination of the calculating step (26-34) where the supplementary face is defined by the current values obtained, or
• if the answer at the verification sub-step (34) is no, return to the variation sub-step (28) where the current supplementary face is varied.

**3.** Method according to Claim 1, in which the calculating step (26-34) is carried out by optimization of a front or rear surface (12, 14) of the supplementary face (10).

**4.** Method according to Claim 2, in which the optimized surface is the rear surface (12) of the supplementary face adjacent to the lens (6).

**5.** Method according to Claim 3 or 4, in which the surface (14) of the supplementary face other than the optimized surface (12) is spherical.

**6.** Method according to one of Claims 1 to 3, in which the supplementary face has a spherical rear surface (12) with a sphere equal to the sphere of the front face of the lens (6) at said centre.

**7.** Method according to Claim 6, in which the supplementary face (10) has a thickness at the centre of less than or equal to 2.5 mm.

**8.** Method according to Claim 6 or 7, in which the supplementary face (10) has a surface treatment on at least one of its surfaces.

**9.** Assembly composed of a supplementary face (10) for spectacles and of a lens (6) mounted in a spectacle frame, the lens (6) being a progressive lens adapted to the prescription of a wearer and having an optical or geometric centre,
in which the supplementary face (10) is defined and mounted detachably in front of and on the lens (6) according to the method of one of Claims 1 to 8,
in which the supplementary face (10) has a surface at least equal to the surface of the lens (6) and a continuous optical power variation over this surface, such that said assembly does not generate discontinuity in the optical function afforded to the wearer, which is continuous over the whole field of vision provided by the lens (6), and
in which the supplementary face shifts the zones of vision in order to change from the progressive lens (6) with nasally off-centred near vision to said assembly without nasal off-centring of the near vision zone.

**10.** Assembly according to Claim 9, in which the supplementary face (10) has a spherical rear surface (12) with a sphere equal to the sphere of the front face of the lens (6) at said centre.

CRO

2

4

6 10

CM

8

12

14

Fig. 1

α (°)

A

VL

CM

PmVL

Puissance
moyenne
(D.)

PmVP

VI

VP

Fig. 2

α (°)

B₂

VI

CM

PmVP

Puissance
moyenne
(D.)

PmVL

VP

Fig. 3

α (°)

T, S, P (Dioptrie)

Fig. 4

Fig. 5

Fig. 6

15

α (°)

T, S, P (Dioptrie)

Fig. 7

BETA (Tabo) EN DEGRE

ALPHA EN DEGRE

1.50

2.00

Fig. 8

BETA (Tabo) EN DEGRE

ALPHA EN DEGRE

Fig. 9

Hauteur (mm)

C1, C2 Sphere (Dioptrie)

Fig. 10

X en MM

Fig. 11

X en MM

Fig. 12

Fig. 13

Fig. 14

Fig. 15

Fig. 16

Fig. 17

Fig. 18

```
        ┌─────────────────────────────┐
        │  Choix d'un verre adapté à la │
  20 ────┤  prescription du porteur      │
        └─────────────────────────────┘
                     │
        ┌─────────────────────────────┐
  22 ────┤  Modélisation de la position │
        │  du verre et du clip-on       │
        └─────────────────────────────┘
                     │
        ┌─────────────────────────────┐
  24 ────┤  Choix d'une function optique │
        │  pour l'ensemble verre – clip-on │
        └─────────────────────────────┘
                     │
        ┌─────────────────────────────┐
  26 ────┤  Choix d'un clip-on          │
        │  de départ                    │
        └─────────────────────────────┘
                     │
        ┌─────────────────────────────┐
  28 ────┤  Variation du clip-on        │
        └─────────────────────────────┘
                     │
        ┌─────────────────────────────┐
  30 ────┤  Calcul de la fonction optique de │
        │  l'ensemble verre et clip-on courant │
        └─────────────────────────────┘
                     │
        ┌─────────────────────────────┐
  32 ────┤  Comparaison de la fonction optique │
        │  calculée et de la fonction optique cible │
        └─────────────────────────────┘
                     │
             ◇ Résultat de la          NON
  34 ──────── comparaison
               < seuil ?
                     │ OUI
                  ┌──────┐
  36 ─────────────┤ FIN  │
                  └──────┘
```

Fig. 19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5737054 A
- US 6547703 A
- US 6412942 A
- US 6474810 A
- US 5774200 A
- US 5724118 A
- US 5694192 A
- US 5493348 A
- US 5790230 A
- WO 0181987 A
- US 6027214 A
- US 5880805 A
- US 6244705 A

- US 5598232 A
- FR 2699294 A
- US 5270745 A
- US 5272495 A
- FR 2683642 A
- FR 2704327 A
- FR 2588973 A
- FR 2769997 A
- FR 0406002
- WO 9812590 A
- US 6318859 A
- EP 0990939 A

**Littérature non-brevet citée dans la description**

- **R. NAVARRO ; J. SANTAMARIA ; J. BESCOS.** Accommodation-dependent model of the human eye with aspherics. *Opt. Soc. Am. A.,* Août 1985, vol. 2 (8
- Application of optimization in computer_aided ophthalmic lens design, In Design and Engineering of Optical Systems II. **ALLIONE P. ; AHSBAHS F. ; LE SAUX G.** SPIE Proceedings SERIES. 1999, vol. 3737, 138-148

- **F. ZERNIKE.** Beugungstheorie des Schneidenverfahrens und seiner verbesserten Form, der Phasenkontrastmethode. *Physica,* 1934, vol. 1, 689-704
- A practical guide to Splines. **C. DE BOOR.** Applied Mathematical Sciences. Springer-Verlag, 1978, vol. 27, 333-359